# EUROPEAN PATENT APPLICATION

(11) **EP 1 750 197 A2**
(43) Date of publication of application: **07.02.2007**
(21) Application number: 06253331.0
(22) Date of filing: 27.06.2006
(51) Int. Cl.: G06F 3/033

(54) **Method and apparatus for monitoring an ergonomic risk condition**

(30) Priority: 15.07.2005 US 183108
(71) Applicant: Avago Technologies General IP (Singapore) Pte. Ltd, Singapore 768923 (SG)
(72) Inventor: Depue, Marshall T., San Jose, CA 95126 (US); Xie, Tong, San Jose, CA 95121 (US); Fouquet, Julie E., Portola Valley, CA 94028 (US)
(74) Representative: Jehan, Robert

(57) **Abstract**

A system for monitoring an ergonomic risk condition of a user includes a hand-held device (10) having a sensor (86) that senses a stress parameter related to the user and generates stress data in response. The system additionally includes a processing unit (50) in communication with the sensor (86). The processing unit (50) determines an ergonomic risk condition in response to the stress data.

## Description

The present invention relates to a method and system for monitoring an ergonomic risk condition of a user.

Hand-held devices used in connection with host devices such as desktop and laptop computers, personal digital assistants (PDAs), video games and telephones include the mouse, the joystick and the stylus, each of which is typically designed to fit a nominal human hand. The one-size-fits-all, mass-produced hand-held device does not account for the range of variations in the finger, hand and wrist sizes of the human population.

Some users spend several hours on a given day operating such host devices. Ergonomic studies indicate that some users adopt stress-related behaviors if they become tense while operating the hand-held device. In an example of a mouse used to interface with a computer, the user stress-related behaviors include clenching fingers while holding the mouse and applying a large force to the mouse as the user moves the mouse over a surface. Likewise, the users of joysticks or styli may clench such hand-held device in a manner that stresses the palm, finger and/or wrist of the user.

In some cases, a user of a mouse holds his or her hand and wrist in a position that stresses the user's wrist. In some cases, the stress results in injury to the user's wrist. The stressful wrist position may be caused by habit, chair position, fatigue or stress.

It is better for a user to avoid such stress-induced behaviors, but the user may be so focused on operating the host device that he or she is unaware that he or she has adopted stress behaviors.

The present invention seeks to provide a method and system for monitoring usage risk and in the preferred embodiments for reducing the possibility of the operator of a hand-held device incurring a hand and/or wrist injury resulting from stress-related behaviour while operating such a device.

According to an aspect of the present invention, there is provided a system for monitoring an ergonomic risk condition as specified in claim 1.

According to another aspect of the present invention, there is provided a method of monitoring an ergonomic risk condition as specified in claim 15.

According to another aspect of the present invention, there is provided a system for monitoring an ergonomic risk condition of a user of a hand-held device, the system comprising:
means for sensing at the hand-held device a stress parameter related to the user to generate stress data;
means for determining an ergonomic risk condition based on the stress data; and
means for indicating the ergonomic risk condition.

The preferred embodiment provides a system for monitoring an ergonomic risk condition of a user. The system comprises a hand-held device having a sensor that senses a stress parameter relating to the user and, in response, generates stress data. The system also comprises a processing unit in communication with the sensor. The processing unit is operable to determine an ergonomic risk condition in response to the stress data.

The preferred method of monitoring an ergonomic risk condition of the user of a hand-held device includes sensing at the hand-held device a stress parameter related to the user to generate stress data, determining an ergonomic risk condition based on the stress data, and indicating the ergonomic risk condition.

Embodiments of the present invention are described below, by way of example only, with reference to the accompanying drawings in which:
FIG. 1 is a flow chart illustrating a method of monitoring an ergonomic risk condition of a user in accordance with an embodiment of the invention;
FIG. 2 is a side cross-sectional view along the section line 2-2 shown in FIG. 3 of a hand-held device in accordance with a first embodiment of the invention;
FIG. 3 is a top cross-sectional view along the section line 3-3 shown in FIG. 2 of the hand-held device in accordance with the first embodiment of the invention;
FIG. 4 is a back cross-sectional view along the section line 4-4 shown in FIG. 2 of the hand-held device in accordance with the first embodiment of the invention;
FIG. 5 is a schematic drawing of the hand-held device in communication with a host device in accordance with a second embodiment of the invention;
FIG. 6 is a flow chart illustrating a method of implementing a learning mode in the hand-held device in accordance with an embodiment of the invention;
FIGS. 7A-7B are side cross-sectional views of the hand-held device in contact with a user's hand in accordance with the first embodiment of the invention;
FIG. 8 is a side cross-sectional view of the hand-held device in accordance with a third embodiment of the invention;
FIGS. 9A-9C are back cross-sectional views of the hand-held device in accordance with a fourth embodiment of the invention;
FIG. 10 is flow chart illustrating a method of conforming the hand-held device to the hand of a user in accordance with the fourth embodiment of the invention; and
FIG. 11 is a cross-sectional view of the hand-held device in accordance with a fifth embodiment of the invention.

In the following description, weli-known features of computer systems, portable digital assistants, video game consoles, telephones, styli, joysticks, and mice are not shown or described so as not to obscure the description,

Ergonomics is the science concerned with designing safe and comfortable machines for human operation and use. As defined herein, an ergonomic risk condition is a condition in which the comfort and/or safety of a user is at risk. At a low level ergonomic risk condition, the user is correctly holding and/or operating the hand-held device.

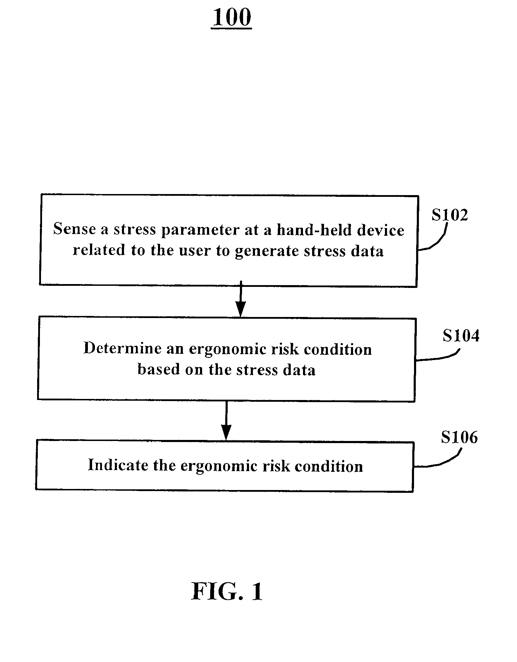

FIG. 1 is a flow chart illustrating a method 100 of monitoring an ergonomic risk condition of the user of a hand-held device in accordance with an embodiment of the invention.

In block S102, a stress parameter related to the user is sensed at the hand-held device to generate stress data. In block S104, an ergonomic risk condition is determined based on the stress data. In block S106, the ergonomic risk condition is indicated to the user.

In an embodiment of block S102, one or more sensors located in or on the hand-held device senses the stress parameter from the user's hand, from one or more of the user's fingers, or the interaction of the user's hand and/or fingers with the hand-held device. The sensor generates the stress data in response to the sensed stress parameter. The hand-held device is a device such as a mouse, a joystick, a telephone, a personal digital assistant or the stylus for a personal digital assistant.

In an embodiment of block S104, the stress data is analyzed to determine an ergonomic risk condition. In one example, the ergonomic risk condition determined is whether or not an ergonomic risk greater than a threshold ergonomic risk exists. In this embodiment, the analysis determines whether the ergonomic risk represented by the stress data exceeds the threshold ergonomic risk. In another example, the ergonomic risk condition determined is a level of ergonomic risk, such as a high level of ergonomic risk or a low level of ergonomic risk. In this embodiment, the analysis determines whether the ergonomic risk represented by the stress data exceeds or is less than a threshold ergonomic risk, or whether the ergonomic risk represented by the stress data exceeds one threshold ergonomic risk or is less than another, lower, threshold ergonomic risk. The high level of ergonomic risk is a level of ergonomic risk in which the user of the hand-held device is stressed and/or is incorrectly using the hand-held device, and therefore is at risk of suffering injury to his or her wrist or hand. In another example, intermediate levels of ergonomic risk exist between the high level of ergonomic risk and the low level of ergonomic risk.

In an embodiment of block S106, a control signal indicative of the determined ergonomic risk condition is sent to an ergonomic risk indicator. The ergonomic risk indicator indicates the ergonomic risk condition to the user. The ergonomic risk indicator may be an audible indicator, a visual indicator, or a tactile indicator or any combination thereof.

When the ergonomic risk represented by the stress data exceeds a predetermined threshold ergonomic risk, the control signal is transmitted to the ergonomic risk indicator to instruct the ergonomic risk indicator to indicate the ergonomic risk condition to the user. In one embodiment, the control signal causes the ergonomic risk indicator to turn ON. In another embodiment, the control signal causes the ergonomic risk indicator to turn OFF, indicating that a low ergonomic risk condition no longer exists. In another embodiment, the control signal causes the ergonomic risk indicator to pulse ON and OFF to attract the user's attention to the ergonomic risk indicator.

When the ergonomic risk represented by the stress data for the user is below a single ergonomic risk threshold or is below a lower ergonomic risk threshold, the control signal may additionally cause the ergonomic risk indicator to indicate such low ergonomic risk condition to the user. In this case, the control signal instructs the ergonomic risk indicator to provide an indication different from that corresponding to the high ergonomic risk condition. In one embodiment, the ergonomic risk indicator comprises more than one indicator and each level of ergonomic risk is indicated by a different indicator. When the ergonomic risk indicated by the stress data for the user is above a single ergonomic risk threshold or above an upper ergonomic risk threshold, the control signal causes the ergonomic risk indicator to indicate the high level of ergonomic risk instead of the low level of ergonomic risk. The control signal instructs the ergonomic risk indicator to turn ON, to turn OFF, or to pulse ON and OFF in a manner different from that corresponding to the indication of the low ergonomic risk condition.

In one embodiment, the ergonomic risk indicator explicitly indicates the existence of an ergonomic risk condition, i.e., an ergonomic risk greater than a threshold ergonomic risk. In another embodiment, the ergonomic risk indicator explicitly indicates the ergonomic risk condition as the level of the ergonomic risk. In yet another embodiment, the user learns how the ergonomic risk indicator indicates the ergonomic risk condition from a user's manual that is provided with the hand-held device. In yet another embodiment, the hand-held device includes a "teaching" button that, when pressed, initiates a teaching mode to help the user learn when he or she is holding the hand-held device in an optimal position for the user's health.

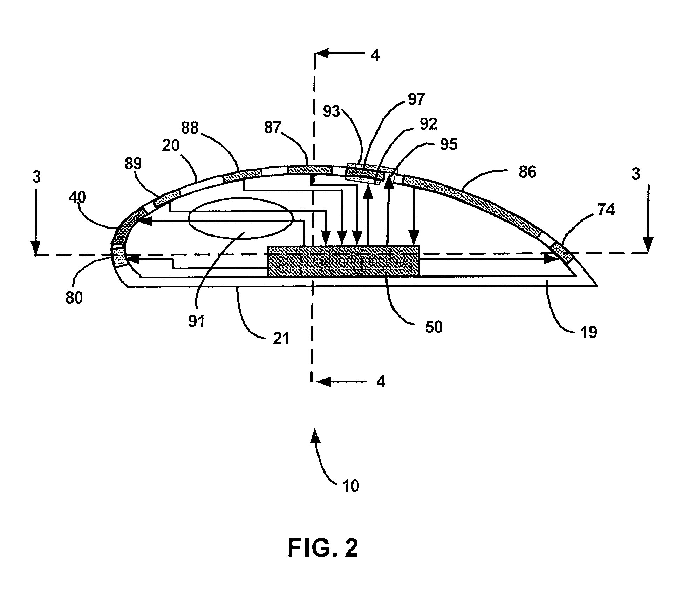

FIGS. 2-4 illustrate a side cross-sectional view, a top cross-sectional view and a back cross-sectional view, respectively, of a first embodiment of a hand-held device 10 in accordance with the invention. The hand-held device 10 has a housing 19 having the conventional shape of a mouse. Housing 19 has a curved top portion 20, a flat bottom portion 21, a first side portion 22, and second side portion 23. The shape and size of the hand-held device 10 differ from the size and shape shown when the hand-held device 10 is embodied as a joystick or a stylus.

The hand held device 10 includes sensors 86-91 disposed on the top portion 20, the first side portion 22, and the second side portion 23 of housing 19. Sensors 86-91 collectively or individually sense respective stress parameters relating to the user and generate stress data in response to the stress parameters. The user's hand (not shown) contacts at least one of the sensors 86-91 during normal operation of the hand-held device 10. The sensors generate stress signals that typically are digitized to provide the stress data. Digitizing is typically performed by an analog-to-digital converter (not shown) that constitutes part of each sensor or is shared among the sensors.

The sensors 87, 88 and 89 are located in the frontward part of the top portion 20, the sensor 86 is located in the rearward part of the top portion 20, the sensor 90 is located in the first side portion 22, and the sensor 91 is located in the second side portion 23. The sensors each measure one or more of resistance, conductivity, impedance, force, temperature, pressure, velocity, acceleration, transinission of light, and reflection of light. The stress parameters determined from the measurements performed by the sensors 87-91 include temperature of the user's skin, conductivity of the user's skin, resistivity the user's skin, impedance the user's skin, force exerted by the user's finger, pressure exerted by the user's finger, force exerted by the user's hand, pressure exerted by the user's hand, the intensity of light transmitted through the user's finger, the intensity of light reflected from the user's finger, the intensity of light transmitted through the user's skin, the intensity of light reflected from the user's skin, and a combination of any two or more of the above.

The sensors 86-91 are circular, elliptical or rectangular in shape, or can have other shapes. The locations and shapes of sensors 86-91 shown in FIGS. 2-4 are examples and may be different from those shown in other embodiments. The locations and shapes of the sensors depend on the design and function of the hand-held device 10. The number of sensors may differ from that exemplified in FIGS. 2-4. As few as one sensor may be used. The sensors 86-91 can additionally include signal processors and/or wireless or wired transmitters.

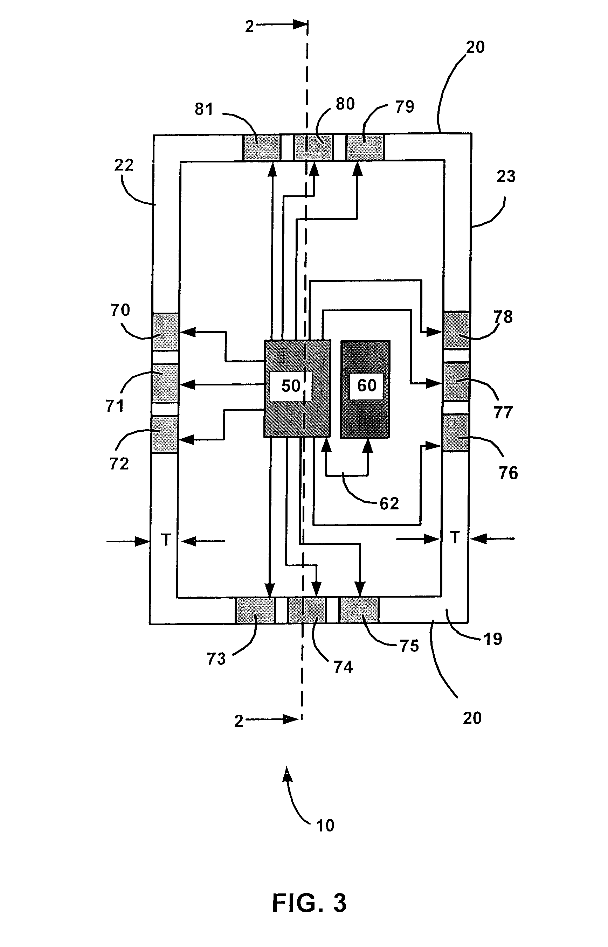

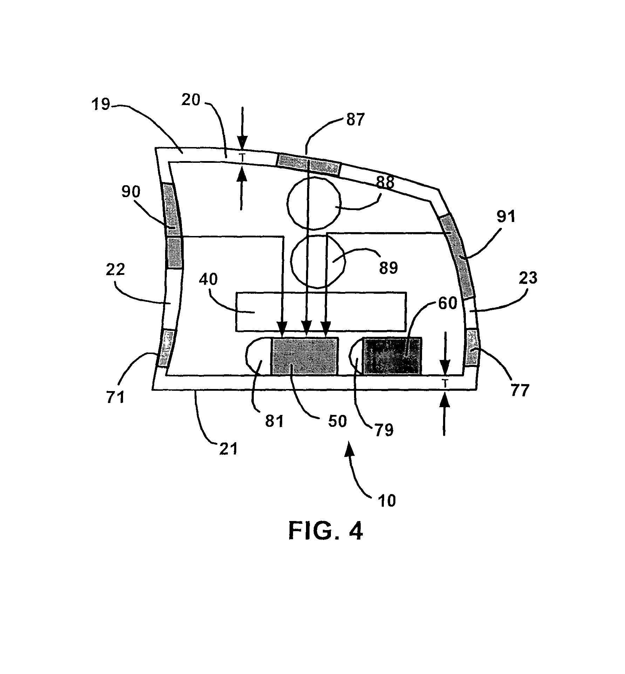

Located within the housing 19 of the hand-held device 10 are a processing unit 50 and a memory 60. Stress data is electrically communicated from the sensors 86-91 to the processing unit 50 via conductive traces or via wires, or wirelessly. In FIG. 4, arrows indicate the direction of communication of sensor data from the sensors 87, 90, and 91 to the processing unit 50. The processing unit 50 determines an ergonomic risk condition based on the received stress data. Additionally, stress data is exchanged between the processing unit 50 and memory 60 via a conductive trace indicated by a double-ended arrow 62 (FIG. 3). The conductive trace is typically part of a printed-circuit board (not shown) on which the processing unit 50 and the memory 60 are mounted. The memory 60 stores data received from processing unit 50. Typically, the memory 60 additionally stores the ergonomic stress condition determined by the processing unit 50. In one embodiment, the memory 60 stores the stress data and the determined ergonomic stress condition as a function of time. In this case, the processing unit 50 retrieves the stored ergonomic stress conditions from the memory and analyzes the ergonomic stress conditions to track the user's ergonomic risk condition over time in order to develop a comprehensive record of a user's behavior for an ergonomic risk assessment.

Ergonomic risk indicators, such as loudspeaker 40, light emitting diodes 70-81, a sac of electro rheological fluid sandwiched between a ground electrode 93 and a signal electrode 92 are coupled to the hand-held device 10. The processing unit 50 communicates a control signal to the ergonomic risk indicators in response to the detennined ergonomic risk condition.

The loudspeaker 40 shown located toward the front of the top portion 20 is an audio indicator. The loudspeaker 40 can be located at other positions in or on the hand-held device 10. To prevent absorption of sound emitted by the loudspeaker 40, the loudspeaker 40 is typically positioned where it is not often covered by the user's hand during normal operation of the hand-held device 10. When the stress parameters indicate that the user is stressed, the audio indicator can emit soothing music. In one embodiment, the hand-held device 10 is a mouse and the pressure applied to a hand-held device 10 by a user's hand exceeds a preset threshold pressure. The hand-held device 10 emits an audio indicator that sounds like a stressed biological mouse in response to the excessive pressure. In another embodiment, the user inputs a user-selected audio data file for each level of ergonomic risk. The selected audio data files are stored in the memory 60. The processing unit 50 processes the appropriate user-selected audio data file for the determined level of ergonomic risk and transmits a resulting audio signal to the loudspeaker 40.

Referring now to FIG. 3, light emitting diodes 70-81 located in the housing 19 collectively constitute a visual ergonomic risk indicator. Control signals from the processing unit 50 are conducted to the light emitting diodes 70-81 via conductive traces and/or or wires. Arrows indicate the direction of communication of the control signals from the processing unit 50 to the light emitting diodes 70-81.

The light emitting diodes 70-81 are shown in FIG. 3 arranged in sets of three. A first set of light-emitting diodes is composed of a light emitting diode of a first color 70, a light emitting diode of a second color 71, and a light emitting diode of a third color 72, and is located in the first side portion 22 of the housing 19. A second set of light emitting diodes is composed of a light emitting diode of the first color 73, a light emitting diode of the second color 74, and a light emitting diode of the third color 75, and is located in the rearward portion of the top portion 20 of the housing 19. A third set of light emitting diodes is composed of a light emitting diode of the first color 76, a light emitting diode of the second color 77, and a light emitting diode of the third color 78, and is located in the second side portion 23 of the housing 19. A fourth set of light emitting diodes is composed of light emitting diode of the first color 79, a light emitting diode of the second color 80, and a light emitting diode of the third color 81,and is located in the forward portion of the top portion 20 of the housing 19.

The light emitting diodes 70-81 are located near the bottom portion 21 in one example but the light emitting diodes 70-81 can alternatively be located in other locations not occupied by the sensors 86-91 or the loudspeaker 40. The locations of the light emitting diodes 70-81 on the hand-held device 10 depend on the design and function of the hand-held device 10.

In another embodiment, the sets of light emitting diodes are composed of light emitting diodes of more than three colors. In another embodiment, there are more than four sets of light emitting diodes. In yet another embodiment, the first color is red, the second color is green, the third color is blue, and a fourth color is amber. Other colors are possible.

The sac of electro-rheological fluid 97 sandwiched between the ground electrode 93 and the signal electrode 92 (FIG. 2) located on the surface of the housing 19 collectively constitute a tactile ergonomic risk indicator. The ground electrode 93 and the signal electrode 92 are located on opposing outside and inside surfaces, respectively, of the top portion 20 of the housing 19. An electrical connection extends from the processing unit 50 to the ground electrode 93, passing through a hole 95 defined in the housing 19. At least part of the top portion 20 between the ground electrode 93 and the signal electrode 92 includes an electro-rheological fluid 97.

In one embodiment, the outer surface of the housing 19 is shaped to define a shallow recess that accommodates the fluid. This allows the signal electrode 92 to be more-or-less flush with the outer surface of the housing 19 and located at the bottom of the recess so that the electro-rheological fluid 97 is sandwiched between the ground electrode 93 and the signal electrode 92.

The electro-rheological fluid 97 solidifies when subject to an electric field generated by applying a voltage between the ground electrode 93 and the signal electrode 92. Graphite particles suspended in the electro-rheological fluid 97 align with the electric field and cause the electro-rheological fluid 97 to solidify.

In an example, when the processing unit 50 determines that the user's level of ergonomic risk is low, the processing unit 50 applies a voltage between the ground electrode 93 and the signal electrode 92. The resulting electrical field applied to electro-rheological fluid 97 causes the electro-rheological fluid 97 to solidify. This imparts a solid feel to the housing 19. The solid feel of the housing 19 indicates the low ergonomic risk condition to the user.

When the processing unit 50 determines that the user's level of ergonomic risk is high, the processing unit 50 stops applying the voltage between the ground electrode 93 and the signal electrode 92. The resulting absence of the electric field allows the electro-rheological fluid 97 to liquefy. This imparts a compliant feel to the housing 19. The compliant feel of the housing 19 indicates the high ergonomic risk condition to the user. In this manner, the hand-held device 10 provides a tactile indication of the ergonomic risk condition to the user.

The material of housing 19 is typically a hard plastic such as acrylic or polycarbonate. The material can be colored or tinted to provide hand-held devices 10 of different colors. The bottom portion 21, the top portion 20 and the side portions 22 and 23 of the housing 19 have a thickness T (FIGS. 3-4), in the range from about 0.25 mm to about 5 mm. The bottom portion 21, the top portion 20 and the side portions 22 and 23 may have different thickness. The bottom portion 21, the top portion 20, the side portion 22, and the side portion 23 can be non-uniform in thickness.

In an embodiment in which the hand-held device 10 is a mouse, the bottom portion 21 typically defines an opening that allows light to pass between the interior of the mouse and a surface (not shown) underlying the bottom portion 21, or to allow a track ball to extend through the bottom portion, as known in the art. In an embodiment in which the hand-held device 10 is embodied as a stylus, the sensors 86-91, the memory 60, the processing unit 50, and the indicators 40 and 70-81 are located in an elongate plastic device having the shape of a stylus. In an embodiment in which the hand-held device 10 is embodied as a joystick, the memory 60 and the processing unit 50 are located in the base of the joystick, the sensors 86-91 are located on the handle that the user holds to operate the joystick, and the indicators 40 and 70-8 are located in either or both of the housing of the base of the joystick and the top of the handle. In an embodiment having a tactile ergonomic risk indicator, such indicator is located at a position where the user's hand or, more typically, the user's fingers can contact it during normal operation. For example, the tactile ergonomic risk indicator may be located on the handle of the joystick.

The sensors 86-91 include one or more of a resistance sensor, a conductivity sensor, an impedance sensor, a temperature sensor, a pressure sensor, a force sensor, a velocity sensor, an acceleration sensor, a light sensor, and combinations thereof. Such sensors are known in the art. In one embodiment, the pressure applied to the hand-held device by the user's hand is sensed with a Honeywell® low-profile silicon pressure sensor. In another embodiment, the sensor is a thin, bendable resistance-based force sensor, such as a FlexiForce® sensor made by Tekscan, Inc. South Boston, MA.

Ground electrode 93 and the signal electrode 92 are composed of metals or metal alloys including, but not limited to, copper, gold, silver, and aluminum. Alternatively, the material of one or both electrodes may be indium-tin-oxide. In one embodiment, the ground electrode 93 and a signal electrode 92 have a thickness in the range from about 5 nm to about 1 mm. In one embodiment, the diameter of the hole 95 is in the range from about 5 µm to about 1 mm.

The light emitting diodes 70-81 comprise Group III-V semiconductor materials, comprising elements such as gallium, arsenic, indium, phosphorus, and nitrogen. Other embodiments comprise organic light-emitting polymers. The material of the light emitting diodes 70-81 additionally includes dopants, such as carbon, silicon, magnesium, aluminum, and zinc. Other materials are possible. The fabrication and use of light emitting diodes that emit light of various colors is known in the art.

The sensors 86-91 may transmit the stress data to the processing unit 50 wirelessly. In this case, the sensors 86-91 include respective short-range wireless transmitters and the processing unit 50 includes a compatible short-range wireless receiver. Two or more of the sensors 86-91 may share a common transmitter. The short-range wireless receivers and transmitters can be Wi-Fi and/or Bluetooth devices as is known in the art. In this case, the processing unit 50 and the sensors 86-91 include short-range wireless chips in accordance with the Wi-Fi and/or Bluetooth standards.

The processing unit 50 may transmit the control signals indicating the ergonomic risk condition to the ergonomic risk indicators wirelessly. In this case, the processing unit 50 includes a short-range wireless transmitter operable to transmit wireless signals to one or more of the indicators, such as loudspeaker 40 and light emitting diodes 70-81, and the indicators include wireless receivers to receive the wireless signals.

The processing unit 50 analyzes the stress data to determine one or more respective user conditions, such as an oxygen level in the user's finger, the user's pulse rate, the position of the user's hand relative to the hand-held device, and the angle of the user's wrist. One or more of the user conditions or combinations thereof form the ergonomic risk conditions.

The processing unit 50 monitors the stress data, user conditions, and ergonomic risk conditions over time. The processing unit 50 analyzes time-dependent stress data, user conditions, and/or ergonomic risk conditions to determine trends in the user conditions and/or trends in the ergonomic risk condition of the user.

In order to determine trends, the sensors 86-91 sense the stress parameters over time, the processing unit 50 receives the corresponding stress data and analyzes the stress data to determine current user conditions and a current ergonomic risk condition. The current user conditions and current ergonomic risk conditions are indicated to the user and stored as a function of time in the memory 60. After a span of time has elapsed, the processing unit 50 retrieves the stored user conditions and ergonomic risk conditions and analyzes the data for trends. As additional stress data is received, the processing unit 50 updates the trends in the user conditions and/or trends in the ergonomic risk condition of the user. In one embodiment, the processing unit 50 additionally stores the received stress data as a function of time in the memory 60 for use in trend analysis.

The trends in user conditions and ergonomic risk conditions are used to provide an ergonomic risk condition assessment to the user. When the ergonomic risk condition is defined in terms of levels of ergonomic risk, the ergonomic risk condition assessment determines a likelihood that the user is subject to a high level of ergonomic risk at certain times of the day or after using the hand-held device 10 longer than a certain time. In one embodiment, a hand held device 10 has multiple users, who each have a login identifier. In this case, the trends in stress parameters are monitored for each user based on the login identifier entered when the user logs onto the hand-held device 10.

The following descriptions of possible indications of an ergonomic risk condition are exemplary and are not intended to limit the indications of the ergonomic risk condition.

In a first example, the processing unit 50 detennines the user's pulse rate is within the normal range of pulse rate, and supplies to the light emitting diodes of the first color 70, 73, 76, and 79 a control signal that turns on these light emitting diodes. The light emitting diodes 70, 73, 76 and 79 generate light of the first color that indicates to the user that the user's pulse rate is within the normal range of pulse rate.

In a second example, the sensors 86-91 sense the pressure applied to the hand-held device by the user's hand and additionally sense the user's pulse rate. From the stress data generated by the sensors 86-91, the processing unit 50 determines that the user's hand is applying a pressure within a normal range but the user's pulse rate is above the normal range of pulse rate. In this example, the processing unit supplies to the light emitting diodes of the second color 71, 74, 77, and 80 a control signal that pulses these light emitting diodes ON and OFF. The light emitting diodes 71, 74, 77, and 80 generate light pulses of the second color that indicate to the user that the user's pulse rate is above the normal range of a pulse rate. The control signal causes the ON/OFF rate of the light emitting diodes of the second color 71, 74, 77, and 80 to be linearly related to the pressure of the user's hand on the hand-held device 10. The pulse rate of the light is slow enough to be visible to the human eye.

In a third example, green light emitting diodes on the hand-held device 10 emit green light when the user's pulse rate is in the normal range of pulse rates and red light emitting diodes on the hand-held device 10 emit red light when the user's pulse rate is in above the normal range of pulse rates.

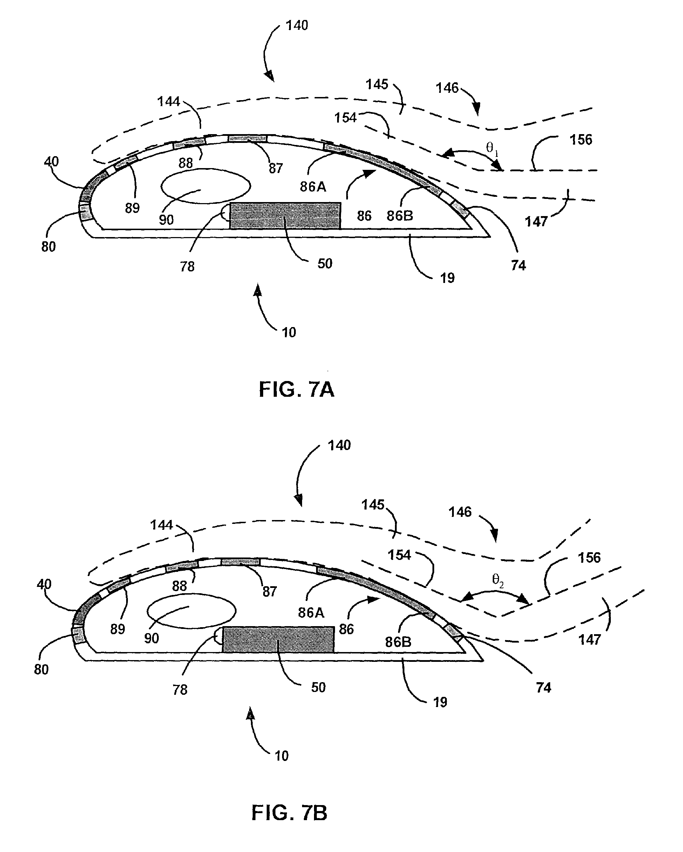

In a fourth example, one or more pressure sensors on the hand-held device 10 sense the pattern of pressure applied by the user's hand to the hand-held device 10. The processing unit 50 analyzes the stress data generated by the pressure sensors to detennine the user's hand position and the user's wrist angle. An example of this analysis will be described below with reference to FIGS. 7A and 7B. When the processing unit 50 determines from the stress data that the user's hand position is in an ergonomically-correct position and the user's wrist angle is an ergonomically-correct wrist angle, the processing unit generates a control signal that causes one or more green light emitting diodes illuminate to indicate to the user that the user is using an ergonomically correct hand and wrist position.

In a fifth example, the pressure sensors sense the user's pulse rate and additionally sense the pattern of pressure applied by the user's hand to the hand-held device 10. The processing unit 50 analyzes the stress data generated by the pressure sensors to determine the user's hand position and wrist angle as described above. The processing unit 50 generates a control signal that causes the light emitting diodes located towards the front of the hand-held device to generate light of a color that indicates correctness of the user's hand position and a control signal that causes the light emitting diodes located towards the rear of the hand-held device to generate light of a color that indicates that the user's pulse rate is within the normal range of a pulse rates.

The ergonomic risk indicator indicating the user's ergonomic risk condition provides feedback to the user so the user can make such adjustments as are needed to reduce the user's level of ergonomic risk. For example, if the ergonomic risk indicator provides an indication that his or her pulse rate is higher than normal, the user can recognize from the indication that he or she is tense. Then the user can take a deep breath or initiate one or more known relaxation techniques. In one embodiment, the instruction manual included with the hand-held device 10 includes information about relaxation techniques.

In one embodiment, the sensors 80-91 in hand-held device 10 generate stress data continuously, the processing unit 50 continuously determines the ergonomic risk condition and the ergonomic risk indicator continuously indicates the user's ergonomic risk condition to the user. In another embodiment, the user is provided an option to inactivate the sensors 80-91 so that they no longer generate stress data. In yet another embodiment, the user is provided an option to prevent the processing unit 50 from causing the ergonomic risk indicator to indicate the user's ergonomic risk condition. In this case, the stress data received at the processing unit 50 from the sensors 80-91 may continue to be stored in memory 60 for later use in an ergonomic user assessment. In yet another embodiment, the user is provided an option to inactivate the sensors 80-91 and the processing unit 50.

In many cases, the hand-held device 10 constitutes at least part of the user interface of a host device, such as a computer system or a portable communication device. In examples, the hand-held device is a mouse that constitutes part of the user interface of a personal computer or other computer system, the hand-held device is a joy stick that constitutes part of the user interface of a personal computer, video game console or other hand held electronic device, and the hand-held device is a stylus that constitutes part of the user interface of a personal digital assistant.

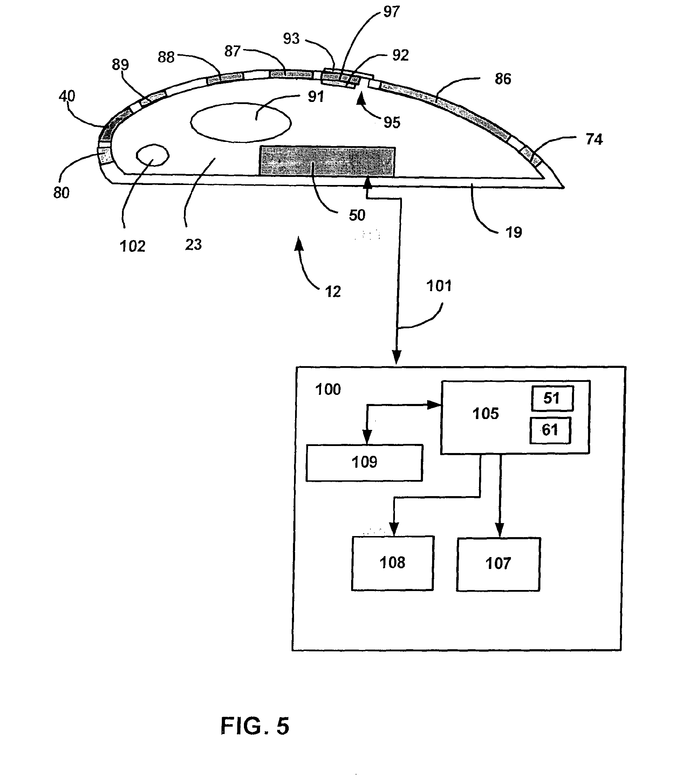

FIG. 5 illustrates an embodiment of the present invention in which the hand-held device constitutes part of the user interface of a host device such as a personal computer and in which the ergonomic risk indicator constitutes part of the host device. FIG. 5 is a schematic drawing of a hand-held device 12 that communicates with a host device 100 in accordance with a second embodiment of the invention. The host device 100 can be a personal computer, a laptop computer, another type of computer or computer system, a portable communication device or a display. Elements of the hand-held device 12 that correspond to elements of the above-described hand-held device 10 are indicated using the same reference numerals and will not be described again in detail.

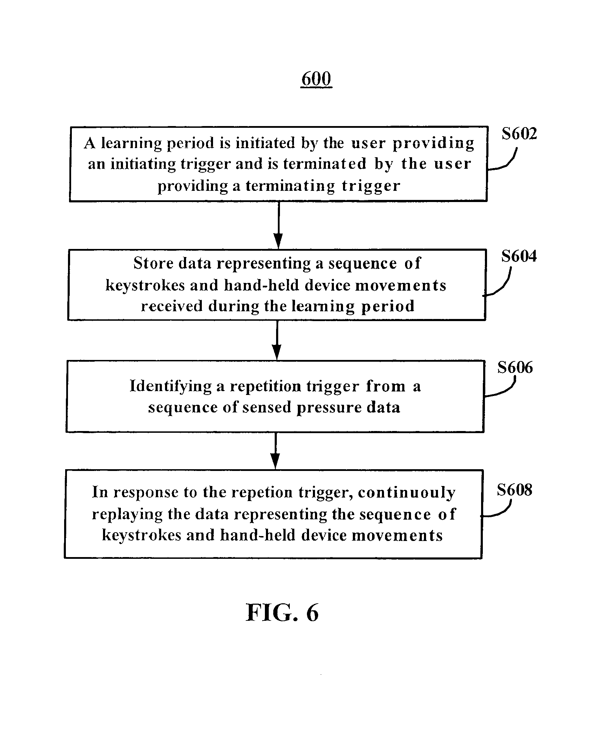

The hand-held device 12 is structurally similar to the above-described hand-held device 10 but additionally includes a learning mode trigger 102. Some embodiments of hand-held device 12 additionally differ in that they lack an ergonomic risk indicator. The learning mode trigger 102 is located in the second side portion 23 of housing 19. The function of the learning mode trigger will be described below with reference to FIG. 6. The hand-held device 12 communicates with the host device 100 via a communication link indicated by the double-ended arrow 101.

FIG. 5 illustrates an embodiment in which the host device 100 is a computer system and includes a computer 105 to which are connected a display 107, loudspeakers 108, and a keyboard 109. The hand-held device 12 is additionally connected to or otherwise communicates with, the computer 105. In this embodiment, the ergonomic risk indicators constitute part of the host device 100 in communication with the hand-held device 12. The computer 105 includes a processing unit 51 and a memory 61. The computer 105 sends display signals to the display 107. The computer 105 sends audio signals to the loudspeakers 108. The keyboard 109 sends keyboard data signals to the computer 105. Communication between computer 105 and the peripheral components of a host device 100, e.g., the keyboard 109, the loud speakers 108 and the display 107 is known in the art.

In one embodiment, the processing unit 50 generates an ergonomic risk condition signal indicative of the ergonomic risk condition of the user and transmits the ergonomic risk condition signal to the host device 100 via the communication link 101. In response to the ergonomic risk condition signal, the host device 100 operates as the ergonomic risk indicator to provide the ergonomic risk indication to the user. The ergonomic risk indication may be a visual indication provided by display 107 or an audible indication provided by loudspeakers 108 or both a visual indication and an audible indication. In another embodiment, the processing unit 50 is located in the host device 100 and the stress data is electrically communicated from the sensors 86-91 via the communication link 101 to the processing unit 50 located in the host device 100. The communication link 101 may comprise a wire, or may be wireless. In this embodiment, the host device 100 typically includes a central processing unit (CPU) 51 and the function of the processing unit 50 is additionally performed by the CPU 51. The host device 100 additionally operates as the ergonomic risk indicator in response to a determination of the ergonomic risk condition by the CPU 51.

In yet another embodiment, the processing unit 50 is distributed between the hand-held device 12 and the host device 100. In this embodiment, the function of the portion of the processing unit 50 located in the host device 100 is typically performed by the CPU 51 of the host device.

In the above-described embodiment in which the hand-held device 12 has no processing unit 50, and the above-described functions of processing unit 50 are performed by the CPU 51 of the computer 105, the sensors 86-89 in the hand-held device 12 send stress data signals to the CPU 51 via the communication link 101. The CPU 51 determines the user's ergonomic risk condition from the received stress data. The computer 105 sends control signals via the communication link 101 to an ergonomic risk indicator embodied as one or more light emitting diodes 70-81 in the hand-held device 12 to provide a visual indication of the user's ergonomic risk condition to the user. Additionally or alternatively, the computer 105 sends display signals to the display 107. The display signals cause the display 107 to operate as the ergonomic risk indicator and provide a visual indication of the user's ergonomic risk condition to the user. In an example, the display 107 displays an icon whose color indicates the user's ergonomic risk condition in a manner similar to the way in which the color of the light emitting diodes 70-81 provides this indication. In yet another embodiment, the display 107 displays a number indicating the user's pulse rate and/or the angle of the user's wrist, In yet another embodiment, the display 107 displays a graph indicating the variation of the user's ergonomic risk condition over time. In yet another embodiment, the display 107 displays a graph of one or more of the user's stress parameters, such as the user's pulse rate, over time. Graphs and/or numbers can be displayed in a corner of the display 107 so that they remain visible as the user views other content on most of the display screen. The computer 105 can allow the user to select the time span covered by the trend graph or the time span can be predetermined and stored in the computer's memory 61 and/or the memory 60, of the hand-held device.

In yet another embodiment, the computer 105 sends an audio signal via the communication link 101 to the loudspeaker 40 in the hand-held device 12 to provide an audio indication of the user's ergonomic risk condition to the user. In yet another embodiment, the computer 105 sends an audio signal to the loudspeakers 108 in the host device 100 to provide an audio indication of the user's ergonomic risk condition to the user. In yet another embodiment, the ergonomic risk indicator is distributed between the host device 100 and the hand-held device 12.

In an embodiment in which the ergonomic risk indicator comprises a tactile indicator, the compliance of the keys of the keyboard 109 is controlled to indicate the user's ergonomic risk condition to the user. In this case, a sac of electro-rheological fluid is located on the respective keycap of one or more the keys of the keyboard 109. The electro-rheological fluid is sandwiched between a ground electrode and a control electrode. In response to determining an ergonomic risk condition to be indicated to the user, the computer 105 sends control signals to the control electrodes on the keys to change the compliance of the keys. The changed compliance of the keys provides the tactile indication of the user's ergonomic risk condition to the user.

Performing a repetitive sequence of keystrokes and hand-held device movements can cause the user to become physically and/or emotionally stressed. An embodiment of the hand-held device provides the user with the capability to initiate a repeated replaying of the repetitive sequence of keystrokes and hand-held device movements with a single application of a sequence of pressures to the hand-held device. In this manner, the single application of a sequence of pressures to the hand-held device alleviates the stress related to repetitive keystrokes and movements.

FIG. 6 is a flow chart illustrating a method 600 of implementing a learning mode in a hand-held device in accordance with an embodiment of the invention. Method 600 is useful when a user repetitively performs the same sequence of keystrokes on the keyboard and hand-held device movements on the hand-held device.

In the method 600, in block 604, data representing a sequence of keystrokes and hand-held device movements is stored during a learning period. In block 606, a repetition trigger is formed from data representing sequence of sensed pressures. In block 608, the data representing the sequence of keystrokes and hand-held device movements is repetitively replayed in response to recognizing the repetition trigger.

To implement the learning mode, the processing unit 50 is modified to adopt a learning mode in which received keystroke data from the host device 100 and hand-held device movement data from the hand-held device 12 or from the host device 100 are stored in the memory 60.

An example of the method 600 performed by the hand-held device 12 connected to host device 100 shown in FIG. 5 will now be described. The processing unit 50 is programmable and has stored in a computer readable medium at least one computer program including computer readable code to perform the operations described with reference to method 600.

In block 602, the learning period is initiated by the user providing an initiating trigger and is terminated by the user providing a terminating trigger. When the processing unit 50 receives the initiating trigger, the processing unit 50 instructs the computer 105 to copy all keystroke data generated by the keyboard 109 to the processing unit 50 until the terminating trigger is received.

In one embodiment, the initiating trigger is provided by the user applying a pressure pulse to the learning mode trigger 102 and the terminating trigger is provided by the user applying a second pressure pulse to the learning mode trigger 102. In another embodiment, the initiating trigger is provided by the user applying a single pressure pulse on the learning mode trigger 102 and the terminating trigger is provided by the user applying a double pressure pulse to the learning mode trigger 102 within less than a preset time, such as one second. In yet another embodiment, the initiating trigger is generated by the computer 105 in response to the user selecting a command, such as "Initiate learning mode," and is sent to the processing unit 50. In yet another embodiment, the terminating trigger is generated by the computer 105 in response to the user selecting a command, such as, "End learning mode," and is sent to the processing unit 50.

In block S604, the processing unit 50 stores the data representing the sequence of keystrokes and hand-held device movements received during the learning period. The keystrokes are input at the keyboard 109 and generate keyboard data that represents the keystrokes. The keyboard data is copied to the processing unit 50. Movement sensors in the hand-held device 12 sense movements of the hand-held device and generate movement data that represents the movement of the hand-held device. The movement data is sent to the processing unit 50. The processing unit 50 stores the keystroke data and movement data in the memory 60. The data is retrievable from the memory 60 in the same sequence in which it was stored. The hand-held device movements include mouse clicks on a mouse or button pushes on a joystick.

The user provides the terminating trigger to processing unit 50 to indicate that the entry of keystrokes and device movements is completed.

In block S606, the processing unit 50 identifies a repetition trigger from a sequence of sensed pressure data. The user initiates and terminates the process of forming the repetition trigger by providing an initiating trigger and a terminating trigger in a manner analogous to that described above with reference to initiating and terminating the learning period.

In one embodiment, forming the repetition trigger for identification by the processing unit 50 has two stages. In the first stage, the user applies pressure to the hand-held device 12 in a specific sequence. One or more pressure sensors in the hand-held device 12 sense the sequence of pressure applied to the hand-held device and generate the data that represents the sequence of sensed pressure. The data is sent to the processing unit 50.

In the second stage, the processing unit 50 links the data representing the sequence keystrokes and hand-held device movement that was stored in block S604 to the data that represents the sequence of sensed pressure.

The data representing the sequence of sensed pressure provides a repetition trigger. When the processing unit 50 receives similar data generated by the user applying the same sequence of pressure to the hand-held device 12, the processing unit 50 recognizes that the user has input the repetition trigger and initiates repetitive replaying of the data representing the sequence of keystrokes and hand-held device movements.

The sequence of pressure that the user applies to the hand-held device 12 to provide the repetition trigger is one that is not likely to occur during normal operation of the hand-held device 12 to interface with the host device. For example, the sequence of pressure may include the user applying pressure at a single point of pressure at one end of an elliptical sensor 90, followed by applying pressure at a single point of pressure at the middle of the elliptical sensor 91, followed by applying pressure at a single point of pressure at the end of the strip sensor 86 above the light emitting diode 74. This specific sequence of pressure is not likely to occur in normal operation of the hand-held device 12.

In one embodiment, the sequence of pressure constituting the repetition trigger is a single application of pressure that is not a typical application of pressure during normal operation of the hand-held device 12. In one example, the sequence of pressure is a squeeze applied to the hand held device 12 between points on the first side portion 22 and second side portion 23.

In block S608, the user applies sequence of pressures constituting the repetition trigger to initiate a repetitive replaying of the data representing the keystrokes and hand-held device movements. The processing unit 50 recognizes the data generated by the pressure sensors in response to the repetition trigger as the repetition trigger and, in response, begins to continuously playback the data representing the sequence keystrokes and hand-held device movements. The replayed data has the same effect as the user repetitively entering the sequence of keystrokes and hand-held device movements, but the user need only observe the results. This reduces the number of keystrokes and hand-held device movements that the user has to perform and, hence, reduces the user's ergonomic risk condition. The user ends the repetitive replaying of the data representing the sequence of keystrokes and hand-held device movements by a second application of the repetition trigger. In another embodiment, the user ends the repetitive replaying of the data representing the sequence of keystrokes and hand-held device movements by operating one of the keys on the keyboard 109.

The data representing the sequence of keystrokes and hand-held device movements is replayed as many times as desired in response to the single application of the repetition trigger to the hand-held device 12. In this manner, the number of keystrokes and hand-held device movements made by the user on the keyboard 109 and the hand-held device 12, respectively, is reduced.

In some cases, the repetition trigger is used to initiate an operation that is performed repeatedly. For example, the repetition trigger can be used to modify repetitively a set of data in a spreadsheet. In other cases, the repetition trigger is used to initiate an inputting operation that is performed once daily or almost daily. For example, the repetition trigger can be used to enter the same input in a timecard five days a week. Different sequences of keystrokes and hand-held device movements may be learned each with a respective repetition trigger.

One aspect of the user's ergonomic risk condition is the angle of the user's wrist when operating the hand-held device. In embodiments of the invention, the processing unit analyzes the stress data generated by pressure and/or force sensors located on the hand-held device to determine the angle of the user's wrist. An example of such embodiments will be described next with reference to FIGS. 7A and 7B.

FIGS. 7A-7B are side cross-sectional views of the hand-held device 10 in accordance with the first embodiment of the invention. The user's hand 140 is shown in contact with hand-held device 10. The user's hand includes fingers 144 and palm 145. The user's wrist 146 joins the hand 140 to the forearm 147, only part of which is shown. In FIG. 7A, a wrist angle θ₁ is the angle between the line 154, which is parallel to a major plane of the palm 145 and the line 156, which is parallel to the axis of the forearm 147. The sensors 86, 87, and 88 are pressure sensors located to contact a user's palm and fingers during normal operation of the hand-held device 10.

As shown for a wrist angle θ₁, the user's palm 145 touches a fore region 86A of the strip sensor 86 but does not touch an aft region 86B of the strip sensor 86. The fore region 86A of the strip sensor 86 is the region of the strip sensor 86 close to the sensor 87 and the aft region 86B of the strip sensor 86 is the region of the strip sensor 86 close to the light emitting diode 74. Strip sensor 86 is capable of sensing the pressure difference between the fore region 86A to the aft region 86B.

When the user's wrist angle is approximately θ₁, as shown in FIG. 7A, the user's hand subjects the sensors 86, 87, and 88 to an identifiable pressure pattern and ratio of pressures. In an exemplary case, a pressure A is sensed by the fore region 86A, a pressure B is sensed by the aft region 86B, a pressure C is sensed by sensor 87 and a pressure D is sensed by sensor 88. Processing unit 50 performs an algorithm that determines the user's wrist angle from the pressure pattern and pressure ratios obtained from the sensor data generated by the sensors86, 87, and 88. Thus, the algorithm performed by processing unit 50 operates on sensor data representing pressures A, B, C, and D, and data representing the pressure ratios A/B, A/C, A/D, B/C, B/D, and C/D to determine a wrist angle θ₁.

A user holding his or her wrist at a stressful wrist angle for a prolonged time can impair the health of the wrist. For the exemplary user shown in FIGS. 7A and 7B, the wrist angle θ₁ is optimal for the health of the wrist 146. In one embodiment, the sensors 86, 87 and 88 of hand-held device 10 are calibrated by an algorithm performed by the processing unit 50 to recognize when the user's wrist angle θ₁ is optimal for the health of the wrist 146. In another embodiment, the user calibrates the wrist angle determining algorithm by holding the hand-held device 10 with his or her wrist 146 in a position that is ergonomically correct. The user than presses a calibration input button (not shown) on the hand-held device 10 to cause the processing unit 50 to record the current pressure pattern and pressure ratios represented by the sensor data generated by the sensors 86, 87 7 and 88 corresponding to the optimal wrist position. In one embodiment, the learning mode trigger 102 (FIG. 5) is used as the calibration input button and the calibration is initiated when the user applies a pressure pulse to the learning mode trigger 102.

In FIG. 7B, the user's wrist angle has changed to an angle θ₂, different from the optimum wrist angle θ₁ shown in FIG. 7A. With this wrist angle, the user's palm 145 touches both the fore region 86A and the aft region 86B of the strip sensor 86. As a result, the pressure pattern sensed by the sensors 86, 87, and 88 and pressure ratios derived from the sensed pressures do not match the pressure pattern and pressure ratios indicating the ergonomically-correct wrist angle. By detecting differences between the sensed pressure pattern and the derived pressure ratios and the pressure pattern and derived pressure ratios corresponding to the optimum wrist angle, the processing unit 50 determines that the user's wrist angle is not optimal. In this case, the processing unit 50 activates the ergonomic risk indicator to indicate the user's non-optimal wrist angle to the user.

In one embodiment, the ergonomic risk indicator is an icon displayed in a corner of the display 107 of the host device 100 (FIG. 5). The icon indicates the user's current wrist angle relative to the user's optimum wrist angle. The ergonomic risk indicator prompts the user to change his or her current wrist position. In another embodiment, the ergonomic risk indicator prompts the user to change his or her current wrist position and indicates a direction of movement of the hand 140 and/or the forearm 147 that will optimize the user's wrist angle.

In yet another embodiment, the sensors 86, 87, and 88 are force sensors and the algorithm in processing unit 50 is operable to determine a wrist angle from the force pattern and ratios of the forces.

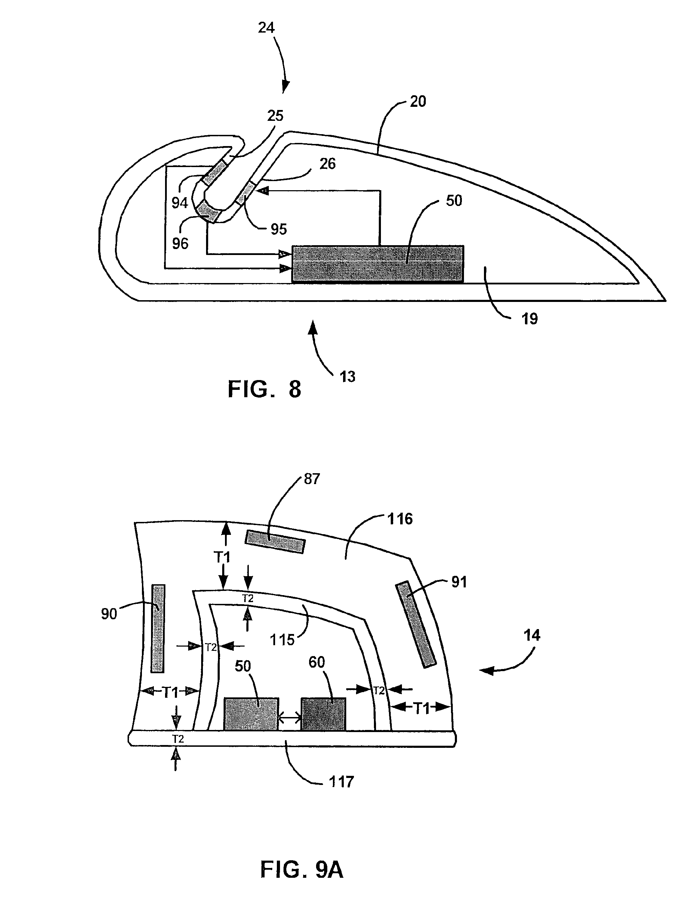

FIG. 8 is a side cross-sectional view of the hand-held device 13 in accordance with a third embodiment of the invention in which the user's blood oxygen level is sensed. The hand-held device 13 is based on the hand-held device 10 or on the hand-held device 12. The top portion 20 of the housing 19 defines a recess 24 having opposed sides 25 and 26. A light sensor 94 is located in side 25 and a light emitting diode 95 is located in side 26. The light emitted from the light emitting diode 95 illuminates the sensor 94. The user inserts one of his or her fingers into the recess 24, the sensor 94 generates the stress data by measuring the change in the intensity of the light illuminating the sensor as a result of the presence of the user's finger in the recess, and the processing unit 50 calculates the user's blood oxygen level in response to stress data received from light sensor 94.

In one embodiment, a pressure sensor 96 is located at the bottom of the recess 24. The pressure sensor 96 sends a signal to the processing unit 50 when the pressure sensor 96 senses the pressure applied by the user's finger. The signal from the pressure sensor 96 triggers the processing unit 50 to generate a control signal that turns the light emitting diode 95 ON. In this case, the light emitting diode 95 is only turned ON when the user inserts a finger into the recess 24. In FIG. 8, arrows indicate the direction(s) of communication between processing unit 50 and each of the pressure sensor 96, the light emitting diode 95, and the light sensor 94.

In an embodiment in which no recess similar to the recess 24 is defined in the housing 19, the light sensor 94 is located on the top portion 20 of the housing 19 adjacent the light emitting diode 95. The light sensor 94 is positioned to receive light generated by the light emitting diode 95 and reflected by the user's finger. The processing unit 50 calculates the user's blood oxygen level from the stress data provided by the light sensor 94 as a result of sensing the intensity of the light reflected by the user's finger. In this embodiment, the light sensor 94 and the light emitting diode 95 are located adjacent to each other on a region of portion 20, 22, or 23 of housing 19 that one of the user's fingers typically contacts during normal operation of the hand-held device 10.

In another embodiment, the pressure sensor 96, the light sensor 94 and the light emitting diode 95 are located adjacent one another on the portion 20, 22, or 23 of housing 19. In this embodiment, contact between one of the user's fingers and the pressure sensor 96 causes the pressure sensor 96 to generate a detection signal. The detection signal causes the processing unit 50 to generate a control signal to turn ON the light emitting diode 95. The light sensor 94 detects the intensity of the light generated by the light emitting diode 95 and reflected by the user's finger to provide the stress data. The processing unit 50 receives the stress data from the light sensor 94 and from it calculates the user's blood oxygen level. In this embodiment, the light sensor 94, the light emitting diode 95, and the pressure sensor 96 are located close enough to one another to be capable of all contacting the user's finger.

In yet another embodiment having a recess similar to recess 24 shown in FIG. 8, the light sensor 94 is located adjacent the light emitting diode 95 in the recess 24 and the user's blood oxygen level is calculated by the processing unit 50 in response to the stress data generated by the light sensor 94 in response to the intensity of the light generated by the light emitting diode 95 and reflected by the user's finger. In yet another embodiment, the web between the user's thumb and index finger is inserted into the recess 24 to measure the user's blood oxygen level.

Ways of measuring blood oxygen levels from measurements of transmitted or reflected light are known in the art.

FIGS. 9A-9C are back cross-sectional views of a hand-held device 14 in accordance with a fourth embodiment of the invention. In this embodiment, the housing 119 of hand-held device 14 includes a malleable outer shell 116 that is capable of conforming in shape to the user's hand 140 (FIGS. 7 A and 7B). In some embodiments, the material of the outer shell is then cured to form a rigid hand-held device 15 that conforms in shape to the user's hand 140.

The housing 119 is composed of a rigid inner shell 117, a rigid base 116 and a malleable outer shell 116. The outer shell 116 is composed of a malleable material. The outer shell 116 surrounds the inner shell 117 on its top and sides and overlies part of the rigid base 117. The inner shell 115 and the rigid base 117 support the outer shell 116. The inner shell 117 houses the processing unit 50 and the memory 60. The processing unit 50 and memory 60 communicate with each other as described above with reference to FIG. 3.

Sensors are typically located on or in the surface of the outer shell 116 in the hand-held device 14 in a manner similar to that described above with reference to hand-held devices 10 and 12. In the example shown, sensors 87, 90, and 91 are located on the outer shell 116 and operate as described above with reference to FIGS. 2-4. The ergonomic risk indicator, such as that embodied in light emitting diodes 70-81 shown in FIGS. 2-4, is not shown in FIGS. 9A-9C, but is located on the outer shell 116 in some embodiments.

The rigid base 117 and inner shell 115 are composed of a rigid plastic material having a thickness T2 in the range from about 0.5 mm to about 3 mm. Examples of the rigid plastic material from which the inner shell 115 and base 117 are made include hard plastic materials such as acrylic and polycarbonate.

The material of the outer shell 116 is a malleable plastic material having a thickness T1 in the range from about lmm to about 10 mm. The material of the outer shell 116 can be colored or tinted to provide hand-held devices 14 in different colors. In an embodiment, the material of the outer shell 116 is a flexible injection-moldable plastic material, such as plasticized polyvinyl chloride (PVC), a thermoplastic elastomer (TPE), Nylon-11, silicone, or another flexible plastic. TPE is sold by various vendors under the trademarks Santaprene^{™}, Synpreme^{™}, and Kraton®. Nylon-11 is available from numerous vendors. Other inaterials that may be advantageous in certain embodiments of the invention are Pebax 2533® or Pebax 2355® polyether block ainides sold by Arkema. These materials are malleable enough to allow the user to adjust the shape of the hand-held device 14 to a personalized shape that is ergonomically correct.

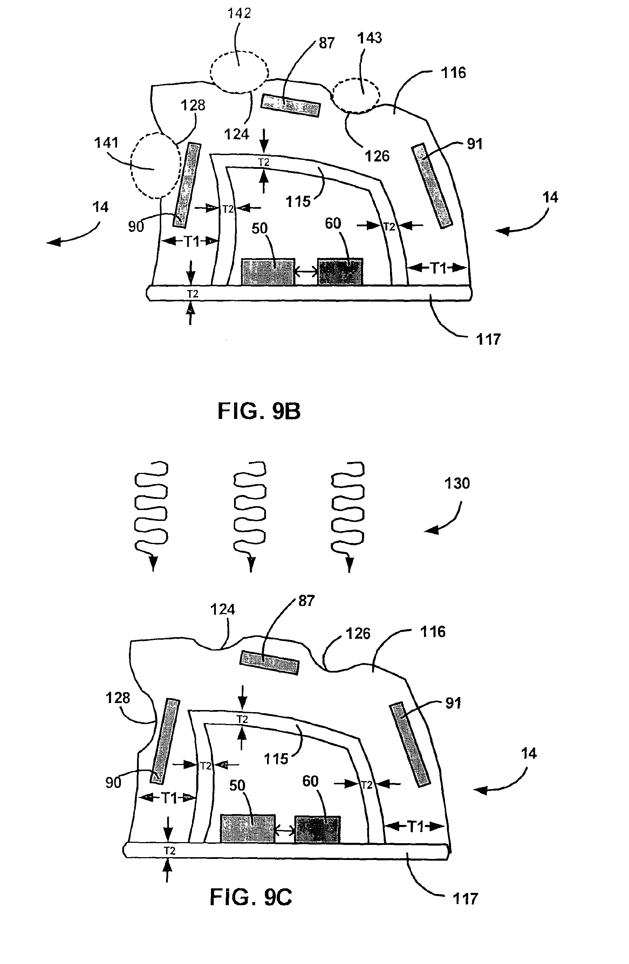

FIG. 9B shows a back cross-sectional view of the conformable hand-held device 14, after the external shape of the conformable hand-held device 14 has been conformed to the shape of the user's right thumb 141 and the user's fingers 142 and 143. Pressure applied by the user's right thumb 141 creates an indent 128 in the top shell 116. Pressure applied by the user's fingers 142 and 143 creates indents 124 and 126, respectively, in the top shell 116.

FIG. 9C shows a back cross-sectional view of the conformable hand-held device 14 after the material of the outer shell 116 has been hardened to maintain the indents 128, 124 and 126 that conform to the shapes of the user's right thumb 141 and the user's fingers 142 and 143, respectively. The material of the outer shell 116 has been hardened by curing it. The sinusoidal arrows 130 represent radiation, such as ultra-violet (UV) light that is directed toward and is incident on the outer shell 116 of the hand-held device 14 to cure the material of the outer shell 116. Ultra-violet light cures ultra-violet curable plastics, such as UV curable acrylics or UV epoxies. UV curable acrylics include ELC-4M01 sold by Electro-lite Corp. UV epoxies include ELC-2500 or ELC-2900 series conformal coatings sold by Electro-lite Corp. and DP031199-1 cationic UV epoxy adhesive sold by Resin Technology Group.

In one embodiment, the conformable hand-held device 14 is left in sunlight to cure after the user has held the conformable hand-held device 14 in an ergonomically correct manner and has conformed the outer shell 116 in shape to his or her hand. In this case, the user does not need to use an artificial ultra-violet light source.

In another embodiment, the sinusoidal arrows 130 represent heat to which the conformable hand-held device 14 is subject to cure the thermoplastic material of the outer shell 116. In this case, the confonnable hand-held device 14 is baked in an oven to cure the outer shell 116. The oven can be a kitchen oven in the user's home.

Heat-curable thermal plastics, such as, thermoplastic resins are based upon a variety of chemical systems, including acrylics, polyacrylates, butyl, polybutene, polyisobutylene, polymers such as liquid crystal polymer (LCP), polyolefin, ethylene copolymers such as polyethylene acrylate acid (EAA), fluropolymers such as polytetrafluorethylene (PTFE) and polyvinylidene fluoride (PVDF), polyvinyl chloride (PVC), ionomers, ketones such as polyetheretherketon (PEEK), polyamides, polycarbonates, polyester, polyether block amide (PBA), polyphenylene oxide (PPO) and polyphenylene sulphide (PPS).

The material of the outer shell 116 of the conformable hand-held device 14 can be cured by other curing techniques. In one embodiment, light outside of the ultra-violet light range cures the material of the outer shell 116.

In another embodiment, the material of the outer shell 116 of the hand-held device 14 is not curable and the outer shell 116 remains malleable. In such embodiments, the outer shell 116 comprises a dense and viscous material that allows the outer shell to retain its shape conforming to the user's hand without curing. The conforming shape remains until changed by a force larger than the range of forces that the user applies during normal operation of the hand-held device 14.

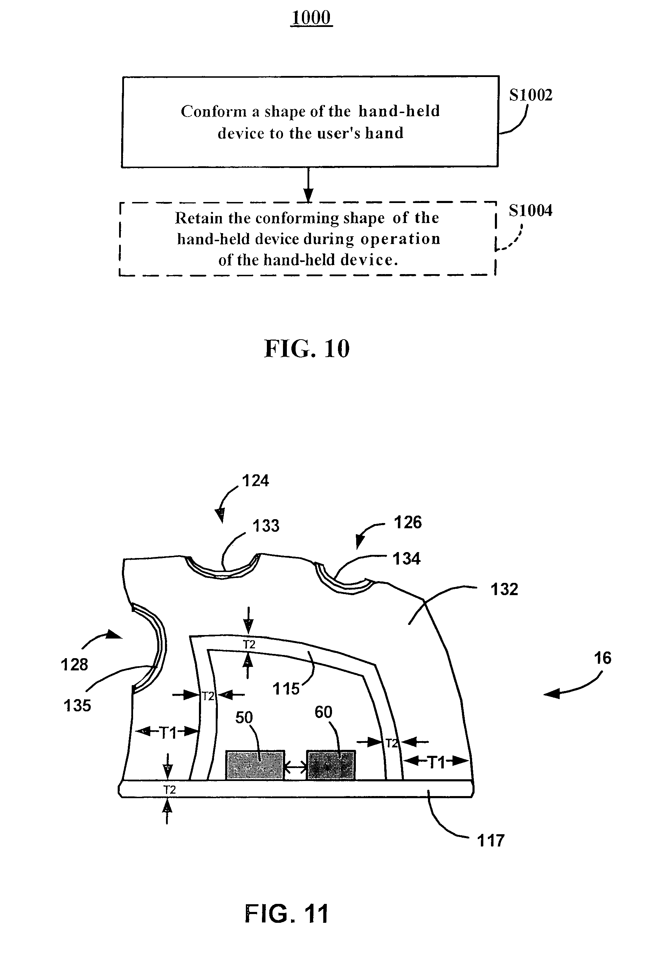

FIG. 10 is flow chart illustrating an embodiment of a method 1000 of making a conformable hand-held device that is conformable in shape to the user's hand in accordance with the fourth embodiment of the invention.

In block S1002, the user conforms the conformable hand-held device in shape to the user's hand. In block S1004, the shape of hand-held device conforming to the user's hand is retained during operation of the hand-held device.

In an embodiment of block S1002, the user operates the conformable hand-held device 14 in response to feedback provided by the sensors, including sensors 87, 90 and 91, the processing unit 50 and the ergonomic risk indicator, to determine an ergonomically-correct hand position. Once the ergonomic risk indicator provides an indication that the user's wrist angle (FIGS. 7A-7B) is ergonomically correct, the user removes his or her hand 140 from the conformable hand-held device 14. When the ergonomic risk indicator indicates that user's wrist angle is not optimum, the user repositions his or her hand 140 until the ergonomic risk indicator indicates that the user's wrist angle is ergonomically optimum. Since the outer shell 116 is malleable, the user operating the hand-held device with an optimum wrist angle, as just described, causes the user's hand 140 to form indents 124, 126, and 128 (FIG. 9B) in the outer shell 116. The indents conform the hand-held device in shape to the user's hand.

In one embodiment of block S1004, the shape of the hand-held device conforming to the user's hand is retained by curing the material of the outer shell 116. The conforming shape of the hand-held device then acts as a guide so that the user's hand remains in a position on the hand-held device corresponding to an optimum or near-optimum wrist angle.

In another embodiment of block S1004, the material of the outer shell 116 remains malleable, but this material is typically dense and viscous, which allows the outer shell 116 to retain its shape conforming to the user's hand without curing. The conforming shape remains until changed by a force larger than the range of forces that the user applies during nonnal operation of the hand-held device 14.

In another embodiment, sacs of electro-rhelogical fluid (not shown) are located on the surface of the outer shell 116 for use as described above in providing a tactile indication to the user of the user's ergonomic condition. In this embodiment, the electro-rhelogical fluid is sandwiched between ground and signal electrodes connected to receive control signals from the processing unit 50. In this embodiment, the material of the outer shell 116 can be a viscous material or can be a material hardened by curing, as described above.

FIG. 11 is a cross-sectional view of a hand-held device 16 in accordance with a fifth embodiment of the invention. In this embodiment, hand-held device 16 is a conformable hand-held device and has a malleable outer shell 116 as described above with reference to FIGS. 9A-9C. In hand-held device 16, thin film sensors are located in the indents formed in the outer shell 116 by conforming the hand-held device 16 in shape to the user's hand. Exemplary thin film sensors 133, 134 and 135 are shown located in the indents 124, 126, and 128, respectively. The indents 124, 126, and 128 are formed in the hand-held device 16 as described above with reference to FIG. 9A-9B.

In one embodiment, thin film sensors 133, 134 and 135 are implemented as FlexiForce® force sensors, available from Tekscan, Inc. In one embodiment, the thin film sensors 133, 134 and 135 are protected from dirt by covering them and the exposed portions of outer shell 116 with a thin layer of flexible plastic material (not shown). In one embodiment, the material of the outer shell 116 is not curable and the outer shell 116 remains malleable, as described above.

The disclosures in United States patent application No. 11/183,108, from which this application claims priority, and in the abstract accompanying this application are incorporated herein by reference.

## Claims

1. A system for monitoring an ergonomic risk condition of a user of a hand-held device (10), the system including:
a sensor (86) operable to sense a stress parameter of the user and, in response thereto, to generate stress data; and
a processing unit (50) in communication with the sensor (86) and operable determine an ergonomic risk condition in response to the stress data.

2. A system according to claim 1, including the hand-held device (10) and in which the hand-held device (10) is one of a mouse, a joy-stick, a telephone, a personal digital assistant, and a stylus.

3. A system according to claim 1 to 2, including an ergonomic risk indicator coupled to the hand-held device, in communication with the processing unit (50) and operable to display the ergonomic risk condition to the user.

4. A system according to claim 3, in which the ergonomic risk indicator includes one or more of an audible indicator, a visual indicator, a tactile indicator and a combination thereof.

5. A system according to claim 3 or 4, in which the ergonomic risk indicator includes a light emitting diode (70).

6. A system according to any preceding claim, including a host device (100) in communication with the hand-held device (12), the host device (100) including the or an ergonomic risk indicator operable to display the ergonomic risk condition to the user.

7. A system according to claim 7, in which the host device (10) includes a display (107), the display being operable as the ergonomic risk indicator.

8. A system according to any preceding claim, wherein the hand-held device (10) comprises a housing (19) within which the processing unit (50) is located.

9. A system according to any preceding claim, including a memory (60) in communication with the processing unit (50).

10. A system according to any preceding claim, wherein the hand-held device (14) is structured to conform in shape to a user's hand.

11. A system according to claim 11, wherein that least part of the or a housing (19, 119) of the hand-held device (14) is conformable in shape to the user's hand and is capable of retaining such shape.

12. A system according to any preceding claim, wherein the stress parameter includes one of user's skin temperature, user's skin conductivity, user's skin resistivity, user's skin impedance, force exerted by a user's finger, pressure exerted by the user's finger, force exerted by the user's hand, pressure exerted by the user's hand, intensity of light transmitted through the user's finger, intensity of light reflected from the user's finger, intensity of light transmitted through the user's skin, intensity of light reflected from the user's skin, and a combination of any of the above.

13. A system according to any preceding claim, in which the sensor (86) comprises one of a resistance sensor, a conductivity sensor, an impedance sensor, a temperature sensor, a pressure sensor, a force sensor, a velocity sensor, an acceleration sensor, a light sensor, and a combination thereof.

14. A system according to any preceding claim, wherein the sensor includes a thin film (133) operable to sense the stress parameter.

15. A method of monitoring an ergonomic risk condition of a user of a hand-held device (14), the method including the steps of:
sensing at the hand-held device (14) a stress parameter related to the user to generate stress data;
determining an ergonomic risk condition based on the stress data; and
indicating the ergonomic risk condition.

16. A method according to claim 15, including the steps of storing the determined ergonomic risk condition as a function of time; and determining a trend in the ergonomic risk condition.

17. A method according to claim 16 or 17, wherein the indicating step includes one of audibly indicating, visually indicating, tactilely indicating and a combination thereof.

18. A method according to claim 16, 16 or 17, including the steps of:
conforming the shape of the hand-held device (14) to the user's hand; and
retaining the conforming shape of the hand-held device (14) during operation of the hand-held device.

19. A method according to claim 15, 16, 17 or 18, including the steps of:
storing data representing a sequence of keystrokes and hand-held device movements received during a learning period;
identifying a repetition trigger from a sequence of sensed pressure data; and
in response to the repetition trigger, continuously replaying the data representing the sequence of keystrokes and hand-held device movements.
